# EUROPEAN PATENT APPLICATION

(11) **EP 1 298 914 A2**
(43) Date of publication of application: **02.04.2003**
(21) Application number: 02021793.1
(22) Date of filing: 26.09.2002
(51) Int. Cl.: H04N 1/327

(54) **Image data sending method, digital camera, image data storing method, image data storing apparatus, and programs therefor**

(30) Priority: 27.09.2001 JP 2001298190
(71) Applicant: FUJI PHOTO FILM CO., LTD., Kanagawa 250-01 (JP)
(72) Inventor: Katayama, Takeshi, Fuji Photo Film Co., Ltd., Ashigarakami-gun, Kanagawa-ken (JP)
(74) Representative: Klunker . Schmitt-Nilson . Hirsch

(57) **Abstract**

Useless transmission of image data can be prevented if the free space size of a data storing apparatus is not enough. Image data are recorded in a recording medium and sent to a server via a mobile phone to be stored therein, when the free space size of the recording medium becomes 0. Before transmission, size information regarding the image data S is sent to the server and compared with the free space size in the server. Information representing a result is sent to the mobile phone. The information may indicate the fact that the image data sets can be sent if there is sufficient free space size. Otherwise, the information includes information for carrying out deletion of image data sets stored in the server, for example.

## Description

### BACKGROUND OF THE INVENTION

### Field of the Invention

The present invention relates to an image data sending method and a digital camera for sending image data obtained and recorded in a recording medium by the digital camera to data storage means installed in a DPE store or the like. The present invention also relates to an image data storing method and an image data storing apparatus for storing image data that are sent, and to programs that cause a computer to execute the image data sending method and the image data storing method.

### Description of the Related Art

Image data obtained by a digital camera are recorded in a portable recording medium such as an IC memory, a Memory Stick, and a Smart Media. Since the capacity of a recording medium is limited, a plurality of recording media are necessary in the case where a large amount of image data need to be recorded. However, it is costly to prepare a plurality of recording media. Furthermore, a recording medium cannot be taken out from some types of inexpensive digital cameras . In such a case, the number of photographs that can be recorded is very limited.

For this reason, there has been proposed a method for storing image data in an external data storing apparatus installed in a DPE store or the like by sending the image data to the apparatus via a communication line. Furthermore, there has been proposed a digital camera that enables deletion of image data recorded in a recording medium or enables setting of property of the image data to allow deletion after sending the image data to a data storing apparatus via a communication line (Japanese Unexamined Patent Publication No. 2000-184324). By using such a digital camera, when the free space of a recording medium becomes small, image data can be sent to a data storing apparatus. Thereafter, the free space can be increased by deleting the image data from the recording medium, and more image data can be recorded therein.

The image data sent by the digital camera described in Japanese Unexamined Patent Publication No. 2000-184324 are stored in the data storing apparatus. However, in the case where the free space in the data storing apparatus has been completely consumed or has become small, the image data cannot be recorded even if the image data are received. Consequently, the time and cost for communication for sending the image data from the digital camera are wasted.

### SUMMARY OF THE INVENTION

The present invention has been conceived based on consideration of the above circumstances. An object of the present invention is therefore to reduce useless transmission and reception of image data.

An image data sending method of the present invention is a method for sending image data recorded in a recording medium by a digital camera to data storage means having a function of remote communication. The digital camera is communicable with the data storage means, and the image data sending method comprises the steps of:
calculating the total size of the image data to be sent to the data storage means; and
sending size information representing the total size to the data storage means before sending the image data.

The digital camera may communicate with the data storage means via a communication terminal such as a mobile phone. In this case, it is preferable for the communication between the digital camera and the communication terminal to be carried out according to a short-distance network communication standard such as Bluetooth for wirelessly connecting a plurality of digital devices. In this manner, in the case where a user has a plurality of digital cameras, the user has to subscribe to only one communication line for sending the image data, which leads to a reduction of the burden on the user.

A digital camera of the present invention is a digital camera that is communicable with data storage means having a function of remote communication. The digital camera has transmission means for sending image data recorded in a recording medium to the data storage means. The digital camera further comprises size calculation means for calculating the total size of the image data to be sent to the data storage means, and the transmission means of the digital camera sends size information representing the total size to the data storage means before sending the image data.

An image data storing method of the present invention is a method of storing the image data sent from the digital camera of the present invention in a storing medium, and the image data storing method comprises the steps of:
comparing the total size of the image data represented by the size information with the free space size in the storing medium; and
sending information in accordance with a result of the comparison to the digital camera.

The storing medium enables storage of the image data in a large amount, and a large-capacity hard disc or the like can be used therefor.

The free space size of the storing medium refers to the size of free space of the entire storing medium. However, in the case where a user directory is generated for each user in the storing medium, the storing medium refers to the user directory.

In the image data storing method of the present invention, it is preferable for the information in accordance with the result of comparison to include either information representing the fact that the image data can be stored in the case where the free space size in the storing medium is equal to or larger than the total size of the image data, or information representing the free space size in the case where the free space size in the storing medium is smaller than the total size of the image data.

In the case where the free space size is smaller than the total size of the image data, it is preferable for the information in accordance with the result of comparison to include at least one of information for prompting deletion of image data already stored in the storing medium, information for prompting an increase in the size of the storing medium, information for prompting cancellation of transmission of the image data, and information for prompting processing for decreasing the total size of the image data to be sent.

In the case where the information for prompting deletion is sent to the digital camera, it is preferable for the image data already stored in the storing medium to be deleted according to information sent from the digital camera concerning deletion of the image data in the storing medium.

Furthermore, in the case where the information for prompting an increase in the size of the storing medium is sent to the digital camera, it is preferable for the size to be increased according to information sent from the digital camera concerning an increase in size.

An image data storing apparatus of the present invention is an apparatus for storing the image data sent from the digital camera of the present invention in a storing medium, and the image data storing apparatus comprises:
comparison means for comparing the total size of the image data represented by the size information with the free space size of the storing medium; and
storage information sending means for sending information in accordance with a result of comparison to the digital camera.

In the image data storing apparatus of the present invention, it is preferable for the information in accordance with the result of comparison to include either information representing the fact that the image data can be stored in the case where the free space size in the storing medium is equal to or larger than the total size of the image data, or information representing the free space size of the storing medium in the case where the free space size is smaller than the total size of the image data.

In the case where the free space size in the storing medium is smaller than the total size of the image data, it is preferable for the information in accordance with the result of comparison to include at least one of information for prompting deletion of image data already stored in the storing medium, information for prompting an increase in the size of the storing medium, information for prompting cancellation of transmission of the image data, and information for prompting processing for decreasing the total size of the image data to be sent.

In the case where the information for prompting deletion is sent to the digital camera, it is preferable for the data storing apparatus of the present invention to further comprise control means for deleting the image data already stored in the storing medium according to information sent from the digital camera concerning deletion of the image data in the storing medium.

Furthermore, in the case where the information for prompting an increase in the size of the storing medium is sent to the digital camera, it is preferable for the data storing apparatus of the present invention to further comprise control means for increasing the size of the storing medium according to information sent from the digital camera concerning an increase in size.

The image data sending method and the image data storing method of the present invention may be provided as programs that cause a computer to execute the methods.

According to the present invention, when the image data are sent to the data storage means, the total size of the image data to be sent is calculated, and the size information representing the total size is sent to the data storage means before transmission of the image data. Therefore, the data storage means can compare the total size of the image data represented by the size information with the free space size of the storing medium, and can obtain the result of comparison representing whether or not the image data can be stored. By sending the information in accordance with the result of comparison to the digital camera, the digital camera can send the image data if the free space size is equal to or larger than the total size. If the free space size is smaller than the total size, the digital camera can cancel transmission of the image data, for example. In this manner, transmission of image data that cannot be stored in the data storage means can be prevented from occurring, and useless transmission and reception of the image data can be reduced.

If the information in accordance with the result of comparison includes the information representing the fact that the image data can be stored in the case where the free space size in the storing medium is equal to or larger than the total size of the image data, an operator (that is, a user) of the digital camera can understand the fact that the image data that are going to be sent are all stored in the data storage means, based on the information in accordance with the result of comparison. Therefore, the user can immediately send the image data, and can increase the free space size of the recording medium of the digital camera for further photography.

If the information in accordance with the result of comparison includes the information representing the free space size of the storing medium in the case where the free space size is smaller than the total size of the image data, the user can understand how much of the image data can be sent. In this manner, the user can reduce the image data to be sent, for example.

If the information in accordance with the result of comparison includes the information for prompting deletion of the image data that are already stored in the storing medium in the case where the free space size in the storing medium is smaller than the total size of the image data, the user can send to the data storage means the information concerning deletion of the image data already stored in the storing medium. In this manner, the user can delete the image data in the storing medium and can secure the free space size in the storing medium for the image data to be sent. As a result, the image data can be sent and stored in the storing medium.

If the information in accordance with the result of comparison includes the information for prompting an increase in size of the storing medium in the case where the free space size is smaller than the total size of the image data, the user can send the information concerning an increase in the size of the storing medium to the data storage means . In this manner, the user can increase the size of the storing medium, and the image data can be sent and stored in the storing medium.

If the information in accordance with the result of comparison includes the information for prompting cancellation of transmission of the image data in the case where the free space size is smaller than the total size of the image data, the user can cancel transmission of the image data.

If the information in accordance with the result of comparison includes the information for prompting the processing for reducing the total size of the image data in the case where the free space size is smaller than the total size of the image data, the user can reduce the size of the image data. In this manner, the user can send and store as much image data as is possible.

### BRIEF DESCRIPTION OF THE DRAWINGS

Figure 1 is a block diagram showing a configuration of an image data sending system adopting a digital camera and an image data storing apparatus of a first embodiment of the present invention;
Figures 2A and 2B show information displayed on a mobile phone;
Figure 3 is a flow chart showing the operation of the first embodiment (part 1);
Figure 4 is a flow chart showing the operation of the first embodiment (part 2);
Figure 5 is a flow chart showing the operation of the first embodiment (part 3);
Figure 6 is a flow chart showing the operation of the first embodiment (part 4);
Figure 7 is a flow chart showing the operation of the first embodiment (part 5);
Figure 8 is a flow chart showing the operation of the first embodiment (part 6);
Figure 9 is a flow chart showing the procedure carried out in the digital camera (part 1);
Figure 10 is a flow chart showing the procedure carried out in the digital camera (part 2);
Figure 11 is a block diagram showing a configuration of an image data sending system adopting a digital camera and an image data storing apparatus of a second embodiment of the present invention; and
Figure 12 is a block diagram showing a configuration of an image data sending system adopting a digital camera and an image data storing apparatus of a third embodiment of the present invention.

### DESCRIPTION OF THE PREFERRED EMBODIMENTS

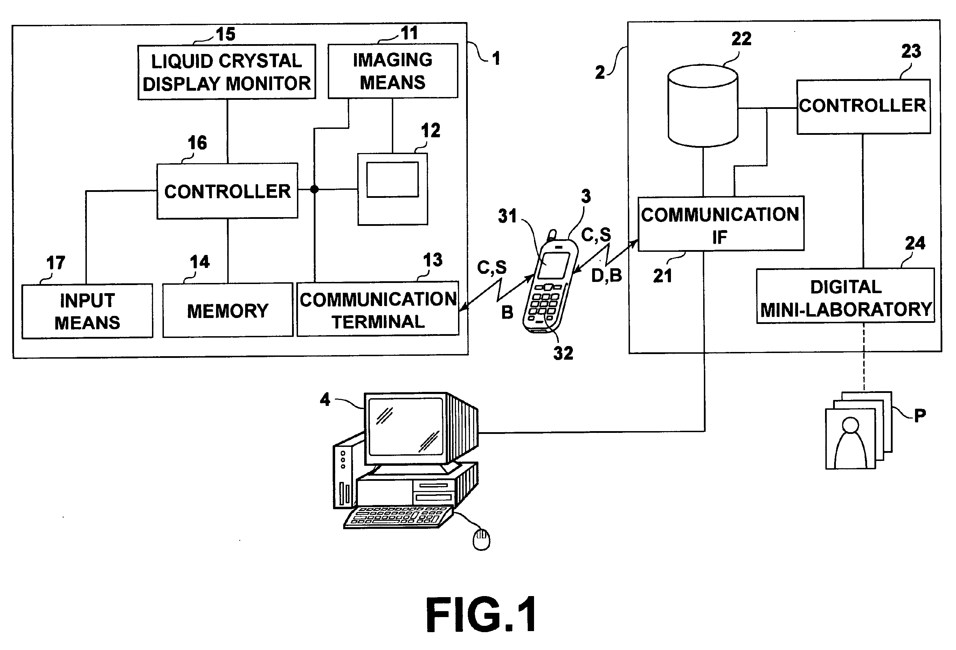

Hereinafter, embodiments of the present invention will be explained with reference to the accompanying drawings. Figure 1 is a block diagram showing an image data sending system adopting a digital camera and an image data storing apparatus of a first embodiment of the present invention. As shown in Figure 1, the image data sending system in this embodiment exchanges data between a DPE store 2 and a digital camera 1, a mobile phone 3, and a personal computer 4 owned by a user.

The digital camera 1 comprises imaging means 11 having a lens, CCDs, a shutter, and an image data recording unit for recording image data sets S obtained by photography in a recording medium 12 for the digital camera 1, a wireless communication terminal 13 for carrying out short-distance communication with the mobile phone 3, a memory 14 that stores ID information representing the user ID or the ID of the digital camera 1 and a program for controlling the digital camera 1, a liquid crystal display (LCD) monitor 15 for image display or the like, a controller 16 for controlling the imaging means 11, the communication terminal 13, and the LCD monitor 15, and input means 17 such as ten keys for carrying out various kinds of input. The controller 16 functions as the size calculation means while the communication terminal 13 and the controller 16 correspond to the transmission means.

The communication terminal 13 communicates with the mobile phone 3 according to a short-distance network communication standard such as Bluetooth for connecting a plurality of digital devices to each other.

The user inputs an instruction to send the image data sets S by using the input means 17 in the case where free space of the recording medium 12 has become small or has been fully used. At this time, the image data sets S stored in the recording medium 12 may all be sent. Alternatively, the image data sets S recorded in the recording medium 12 may be displayed on the LCD monitor 15 so that the user can select the image data sets S to be sent. Furthermore, the controller 16 may monitor the free space of the recording medium 12 so that the controller 16 can automatically send the image data sets S in the case where the free space has been fully used or has become smaller than a predetermined size.

The user may be notified of the necessity for image data transmission in the case where the free space has been fully used or has become smaller than the predetermined size. In this case, the user is notified of the necessity by display on the LCD monitor 15 or a sound such as a chime, for example. Alternatively, the digital camera 1 may notify the mobile phone 3 of the necessity by using the communication terminal 13 so that the mobile phone 3 can notify the user of the necessity according to a predetermined method such as ringing, vibration, or flashing a lamp. It is preferable in this case for the necessity for transmission of the image data sets S to be displayed on an LCD monitor 31 of the mobile phone 3.

The controller 16 reads the ID information stored in the memory 14, and adds the ID information to the image data sets S as tag information thereof, when the image data sets S are sent. Alternatively, the ID information may be sent as a file separate from the image data sets S while being correlated to the image data sets S.

The controller 16 calculates the total size of the image data sets S to be sent, and generates size information C representing the total size. The controller 16 then sends the size information C and the ID information to the DPE store 2 via the mobile phone 3, before sending the image data sets S. The DPE store 2 receives the size information C, and sends information D to the mobile phone 3 for various kinds of processing that will be explained later.

The mobile phone 3 receives the information D and carries out display according to the information D on the LCD monitor 31 thereof, as will be explained later. The mobile phone 3 displays on the LCD monitor 31 a proportion (%) of the image data sets S that have been sent to the image data sets S to be sent during transmission thereof, and the expected transmission completion time, for example.

The DPE store 2 sends to the digital camera 1 via the mobile phone 3 confirmation information B representing the fact that the image data sets S have been normally stored, as will be explained later. When the digital camera 1 receives the confirmation information B, the Archive property of the image data sets S stored in the recording medium 12 is set OFF.

The Archive property is a flag of file properties. When a file is newly generated or the content thereof is changed, the Archive property thereof is automatically set ON. Setting the Archive property ON refers to the fact that the file needs backup. Therefore, in the case where the Archive property is OFF, the file has already been backed up and may be deleted.

The DPE store 2 comprises a communication IF (Interface) 21 for receiving the image data sets S, a server 22 for storing the image data sets S, a controller 23 for controlling the communication IF 21 and the server 22, and a digital mini-laboratory 24 for obtaining prints by printing the image data sets S. The server 22 functions as the storing medium and the controller 23 functions as the comparison means and the control means. The communication IF 21 and the controller 23 correspond to storage information sending means.

The communication IF 21 has a function of remote communication for wirelessly sending and receiving various kinds of data and information.

The controller 23 has a personal computer and a printer, and controls and manages the communication IF 21 and the server 22. The controller 23 stores the image data sets S sent from the digital camera 1 via the mobile phone 3 in the server 22 while classifying the image data sets S according to the ID information added thereto. The server 22 has a directory for each user (hereinafter referred to as the user directory), and the image data sets S are stored in the user directory corresponding to the ID information, with reference to the ID information added to the image data sets S. In the case where the ID information represents the ID of the digital camera 1, a directory may be generated for each digital camera.

The user directory has capacity according to a charge therefor (1000 Japanese yen per 100 MB each month, for example). Therefore, the controller 23 compares the size of free space of the user directory corresponding to the ID information with the size of the image data sets S sent thereto, based on the size information C and the ID information sent from the digital camera 1 via the mobile phone 3 before transmission of the image data sets S. The controller 23 sends the information D in accordance with a result of the comparison to the mobile phone 3.

In this embodiment, the information D includes: (1) information representing the fact that the image data sets S can be stored in the user directory if the free space is large enough for storing all the image data sets S to be sent, or (2) information representing the size of space necessary for storing all the image data sets S if all the image data sets S cannot be stored. The information D also includes information for causing the user to carry out processing according to the either case described above. If the information D includes the information for the case (1), all the image data sets S can be sent. Therefore, the information D includes information for displaying amessage "Transferable". In the case (2) above, the information D includes information notifying the user of the amount of additional necessary space, and information for displaying commands to carry out the various kinds of processing that will be explained later.

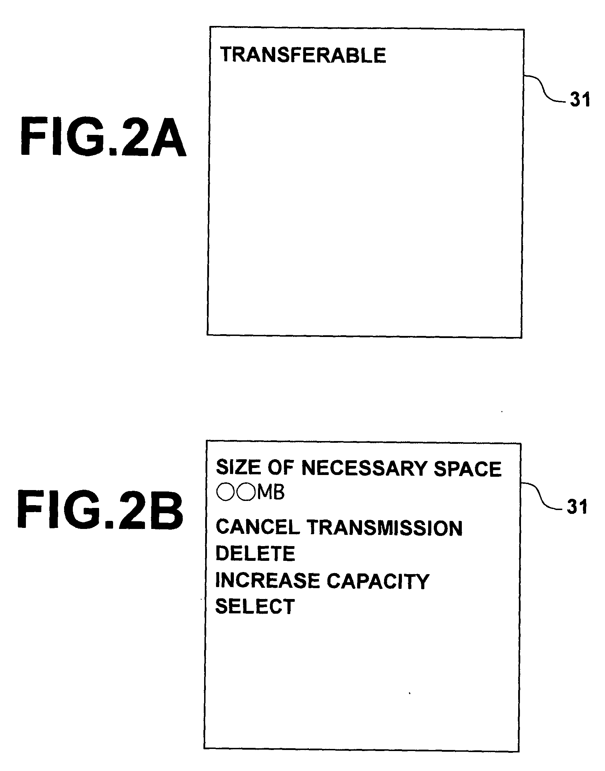

The mobile phone 3 carries out various kinds of display on the LCD monitor 31 for causing the user to carry out the processing based on the information D. For example, if the information D includes the information for the case (1), the message "Transferable" is displayed as shown in Figure 2A. The user confirms the message and can carry out transmission of the image data sets S by operating operation buttons 32 of the mobile phone 3.

Meanwhile, if the information D includes the information for the case (2), the size of necessary space is displayed as shown in Figure 2B. At the same time, the commands "Cancel Transmission", "Delete", "Increase Capacity", and "Select" are shown. The command "Cancel Transmission" is to cancel transmission of the image data sets S. The command "Delete" is used for deleting image data sets of the user already stored in the user directory in the server 22 (hereinafter referred to as the image data sets Ss). The command "Increase Capacity" is to carry out processing for increasing the size of the user directory by payment of an additional charge. The command "Select" is used for carrying out processing to reselect the image data sets S to be sent, in order to send the image data sets S having the size that can be stored in the server 22 by decreasing the total size of the image data sets S to be sent. The user selects a desired one of the commands and causes the digital camera 1, the DPE store 2 and/or the mobile phone 3 to carry out the processing corresponding to the selected command. The user can highlight the display of the desired command and select the command by using the operation buttons 32 of the mobile phone 3.

In the case where the command "Cancel Transmission" has been selected, information representing the cancellation is sent from the mobile phone 3 to the DPE store 2. In the DPE store 2, the controller 23 cancels the processing. In the case where the command "Delete" has been selected, information representing the deletion is sent from the mobile phone 3 to the DPE store 2. In the DPE store 2, the controller 23 deletes the image data sets Ss stored in the user directory in the server 22 in chronological order of the date of photography, and secures the free space in the user directory for storing the image data sets S to be sent. In the case where the command "Increase Capacity" has been selected, information representing the capacity increase is sent from the mobile phone 3 to the DPE store 2. In the DPE store 2, the controller 23 increases the capacity of the user directory in the server 22. In this case, the user needs to pay the additional charge for the increased capacity upon payment for the storage of the image data sets S. Therefore, it is preferable for the user to be notified of the additional charge so that the user can confirm the necessity of the additional charge payment.

In the case where the command "Select" has been selected, information indicating the selection is sent to the digital camera 1. Consequently, a selection page is displayed on the LCD monitor 15 of the digital camera 1, and the user can reselect the image data sets S to be sent while viewing the selection page. In this manner, the size of the image data sets S to be sent can be decreased. Alternatively, the selection page may be displayed on the LCD monitor 31 of the mobile phone 3 to cause the user to reselect the image data sets S.

The digital camera 1, instead of the mobile phone 3, may display the message based on the information D and the commands representing the processing so that the user can select the desired command by using the digital camera 1. In this case, the information D sent from the DPE store 2 is sent to the digital camera 1 via the mobile phone 3, and the message or the commands are displayed on the LCD monitor 15. The user can select the desired command by using the input means 17 of the digital camera 1 while viewing the message or the commands displayed thereon.

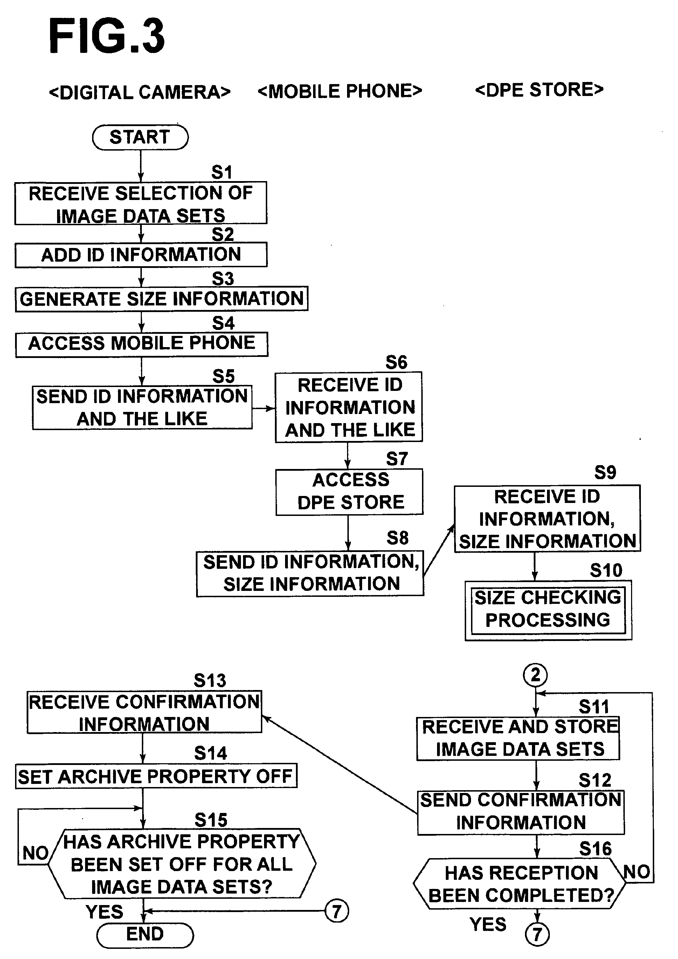

The operation of the first embodiment will be explained next. Figures 3 to 8 are flow charts showing the operation of the first embodiment. The user carries out photography with the digital camera 1 on trip or the like, and records the image data sets S in the recording medium 12. The user requests storage of the image data sets S in the server 22 by sending the image data sets S obtained by the digital camera 1 to the DPE store 2 via the mobile phone 3 in the case where the free space of the recording medium 12 has been consumed or has become small. After the image data sets S have been stored, the user reduces or deletes the image data sets S recorded in the recording medium 12 in order to increase the free space of the recording medium 12, and continues photography.

First, the digital camera 1 receives selection of the image data sets S to be sent (Step S1). In order to select the image data sets S to be sent, the user operates the input means 17 to sequentially display the image data sets S recorded in the recording medium 12 on the LCD monitor 15, and inputs the selection regarding the image data sets S to be sent by using the input means 17. The image data sets S to be sent may be all the image data sets S in the recording medium 12 or only a portion thereof. The ID of the digital camera 1 or the user ID is added to the selected image data sets S as the ID information (Step S2), and the size information C representing the total size of the selected image data sets S is generated after calculation of the total size (Step S3). The IPv6 address of the digital camera 1 may be used as the ID thereof. The communication terminal 13 of the digital camera 1 accesses the mobile phone 3 (Step S4). The digital camera 1 sends to the mobile phone 3 the ID information, the size information C, and the phone number of the DPE store 2 stored in the memory 14 (Step S5).

The mobile phone 3 receives the ID information, the size information C and the phone number (Step S6), and accesses the communication IF 21 of the DPE store 2, based on the phone number of the DPE store 2 (Step S7). The communication between the mobile phone 3 and the communication IF 21 is wireless communication using a public communication channel, and is different from the communication between the digital camera 1 and the mobile phone 3. The mobile phone 3 sends to the DPE store 2 the ID information, and the size information C (Step S8). At the time of accessing the DPE store 2 from the mobile phone 3, authentication for the access may be carried out with reference to the phone number of the mobile phone 3.

The phone number of the mobile phone 3 may be used as the ID information. In this case, the digital camera 1 and the mobile phone 3 do not need to send the ID information at Step S5 and Step S8, respectively.

The DPE store 2 receives the ID information and the size information C (Step S9), and carries out a procedure for confirming the size of free space in the server 22 (Step S10).

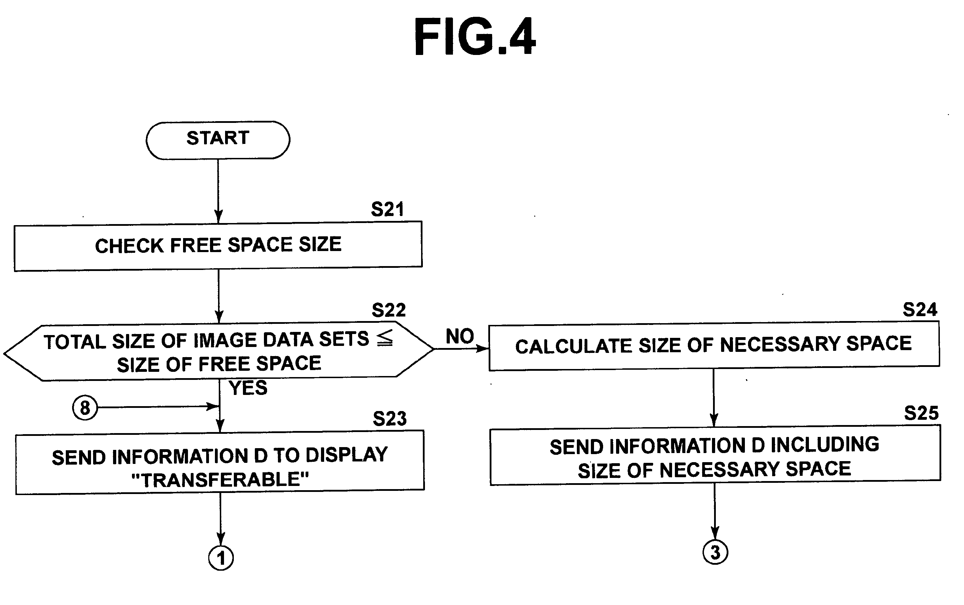

Figure 4 is a flow chart showing the procedure for the free space size confirmation. The size of the free space in the user directory corresponding to the ID information is checked, based on the ID information (Step S21). Whether or not the size is equal to or larger than the total size of the image data sets S to be sent is then judged (Step S22). If a result at Step S22 is affirmative, the information D including the information for displaying the message "Transferable" is sent to the mobile phone 3 (Step S23), since all the image data sets S can be stored.

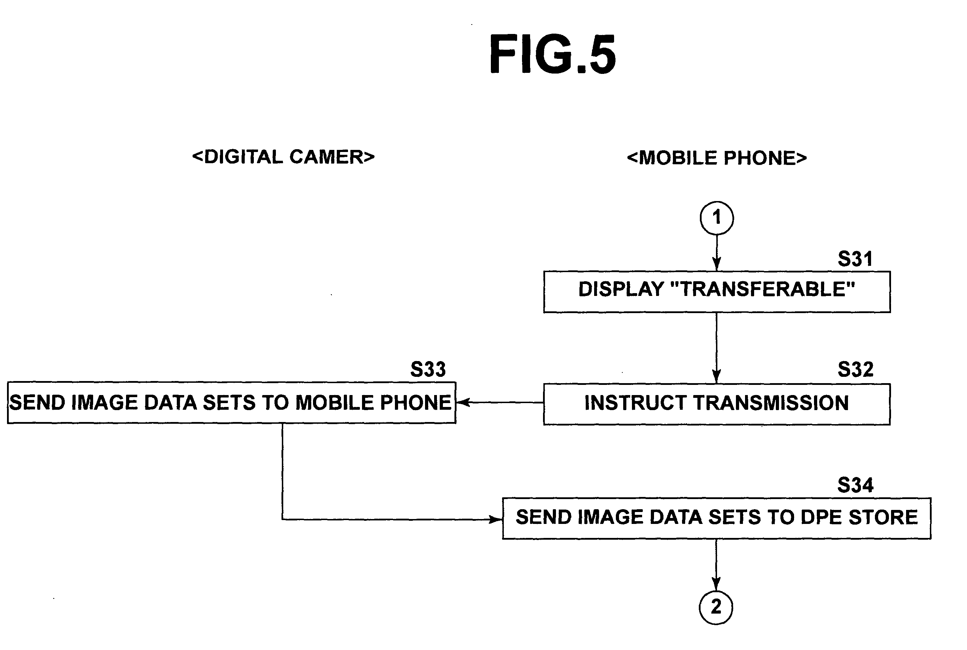

Figure 5 is a flow chart showing a procedure carried out in the mobile phone 3 and the digital camera 1 when the information D including the message "Transferable" is sent. The mobile phone 3 receives the information D, and the message "Transferable" is displayed on the LCD monitor 31 (Step S31), as shown in Figure 2A. The user confirms the message and operates the operation buttons 32 of the mobile phone 3 for starting transmission of the image data sets S. In this manner, the user instructs the digital camera 1 to send the image data sets S (Step S32). When the digital camera 1 receives the transmission instruction, the image data sets S are sent to the mobile phone 3 (Step S33). The mobile phone 3 receives the image data sets S and sequentially sends the image data sets S to the DPE store 2 (Step S34).

When the result at Step S22 in Figure 4 is negative, the size of additional space in the user directory necessary for storing the image data sets S is calculated (Step S24), and the calculated size and the commands for the various kinds of processing described above are sent to the mobile phone 3 by being included in the information D (Step S25).

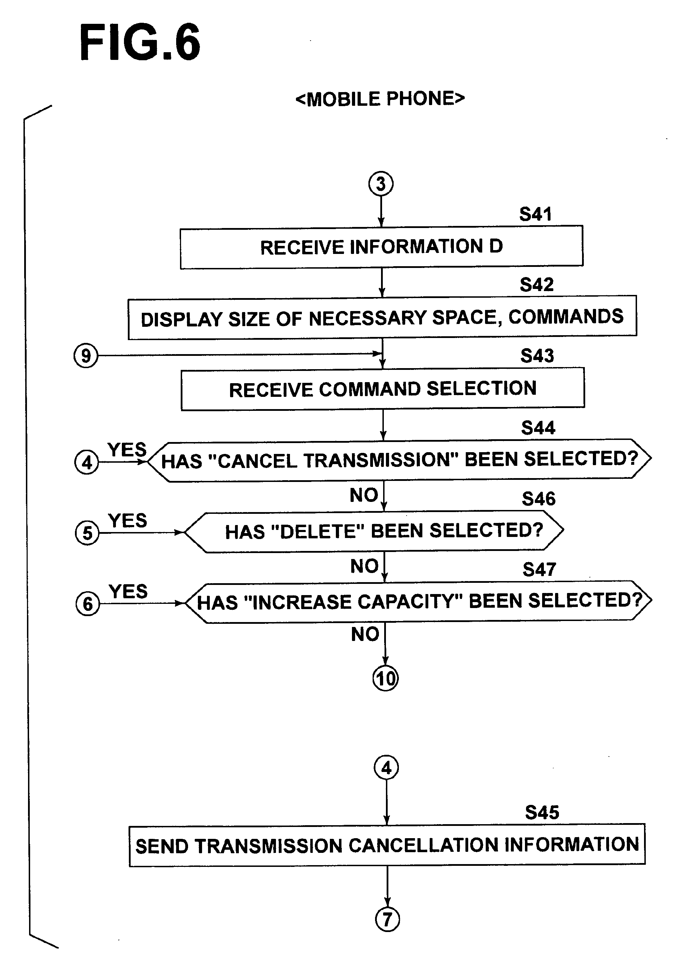

Figure 6 is a flow chart showing a procedure carried out in the digital camera 1, the DPE store 2, and the mobile phone 3 when the information D is sent at Step S25. The mobile phone 3 receives the information D (Step S41), and the size of necessary additional space and the commands for carrying out the various kinds of processing are shown on the LCD monitor 31 (Step S42), as shown in Figure 2B.

The selection of the desired command by the user 1 is received (Step S43). Whether or not the command "Cancel Transmission" has been selected is judged (Step S44). If a result at Step S44 is affirmative, the information indicating cancellation of the transfer is sent to the DPE store 2 (Step S45). The procedure returns to the flow chart in Figure 3, and ends.

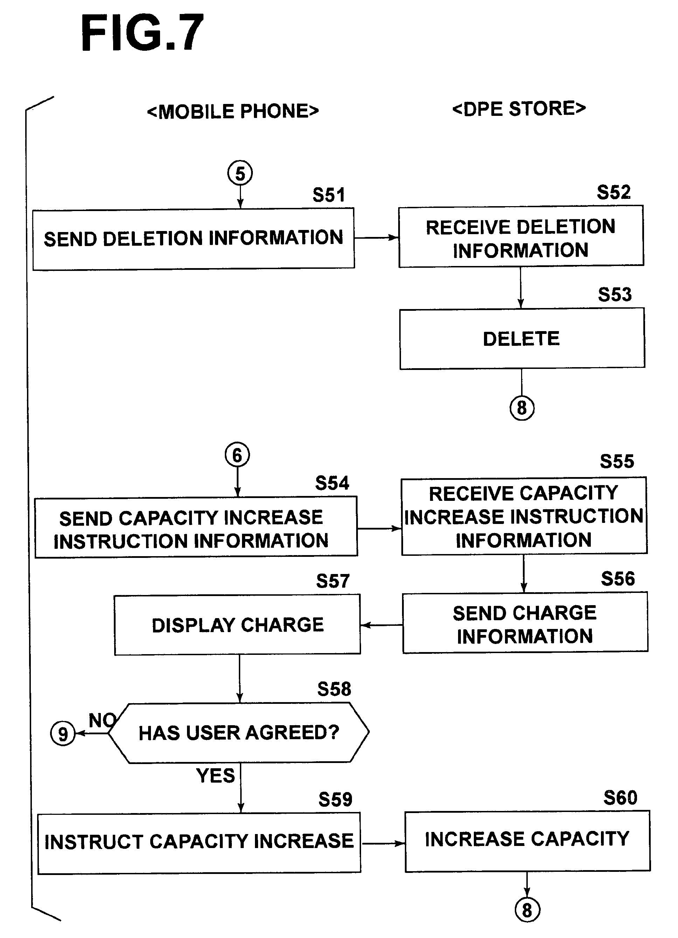

If the result at Step S44 is negative, whether or not the command "Delete" has been selected is then judged (Step S46). If a result at Step S46 is affirmative, the information for requesting deletion of the image data sets Ss stored in the server 22 is sent to the DPE store 2 (Step S51), as shown by the flow chart in Figure 7. The DPE store receives the information concerning deletion (Step S52), and sequentially deletes the image data sets Ss in the user directory in the server 22 according to the chronological order (Step S53), in order to secure the free space for storing the image data sets S to be sent. When the free space necessary to store the image data sets S to be transmitted is secured, the procedure goes to Step S23 of the flow chart in Figure 4, and the information D enabling display of the message "Transferable" is sent to the mobile phone 3. The procedure returns to Step S31 and the procedure thereafter in the flow chart shown in Figure 5 is then carried out.

When the result at Step S46 in Figure 6 is negative, whether or not the command "Increase Capacity" has been selected is then judged (Step S47). If a result at Step S47 is affirmative, information for instructing capacity increase in the user directory is sent to the DPE store 2 (Step S54), as shown by the flow chart in Figure 7. The DPE store receives the information concerning capacity increase instruction (Step S55), and sends charge information representing the additional charge for increasing the capacity of the user directory to the mobile phone 3 (Step S56). The charge information is displayed on the LCD monitor 31 of the mobile phone 3 (Step S57).

If the user inputs agreement to increasing the capacity by paying the additional charge displayed on the LCD monitor 31 (Step S58 YES), the DPE store 2 is instructed to increase the capacity (Step S59). The DPE store 2 increases the capacity of the user directory (Step S60). When the capacity is increased, the procedure goes to Step S23 in the flow chart shown in Figure 4, and the information D for displaying the message "Transferable" is sent to the mobile phone 3. Thereafter, the procedure from Step S31 in the flow chart in Figure 5 is carried out. If a result at Step S58 is negative, the procedure returns to Step S43 in the flow chart in Figure 6, and the procedure thereafter is carried out.

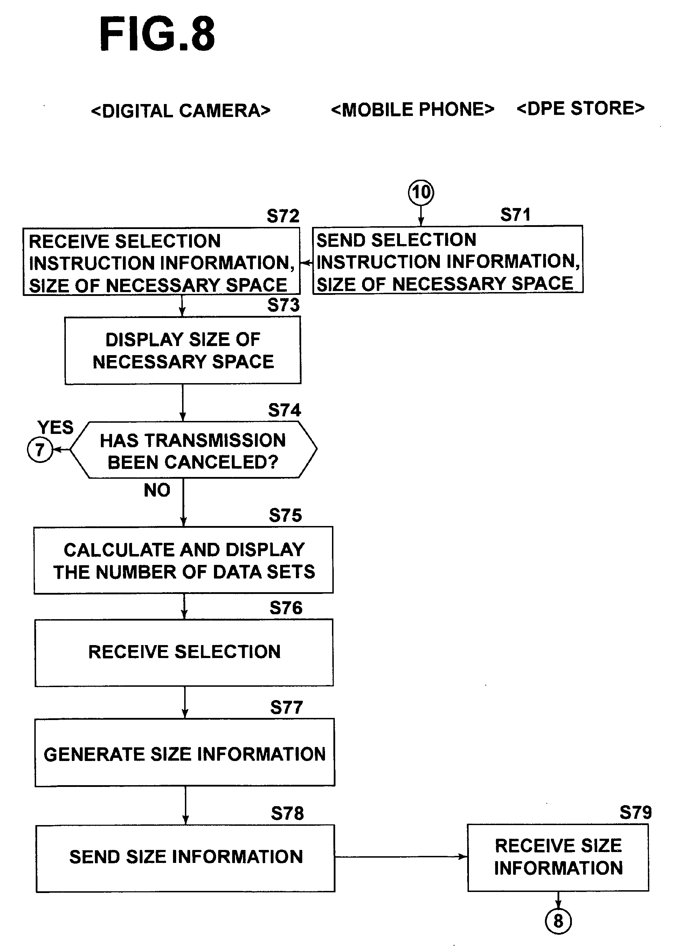

If the result at Step S47 in Figure 6 is negative, the command "Select" is judged to have been selected. As shown in the flow chart shown in Figure 8, the DPE store 2 sends to the digital camera 1 selection instruction information for causing the user to select the image data sets S to be sent and the information representing the size of necessary additional space (Step S71). The digital camera 1 receives the information described above (Step S72), and displays the size of necessary additional space on the LCD monitor 15 (Step S73). The user confirms the size displayed on the LCD monitor 15, and decides whether the transmission of the image data sets S is canceled or carried out. The user inputs the decision by using the input means 17. Whether or not the cancellation has been input is then judged (Step S74). If a result at Step S74 is affirmative, the procedure returns to the flow chart in Figure 3, and ends. If the result at Step S74 is negative, the number of the image data sets S that can be sent is calculated based on the size of necessary additional space, and a calculation result is displayed (Step S75). Selection of the image data sets S in accordance with the calculated number is received (Step S76), and the size information C for the image data sets S that have been selected is generated (Step S77). The size information C is sent to the DPE store 2 via the mobile phone 3 (Step S78). The DPE store 2 receives the size information C (Step S79), and the procedure goes to Step S23 in the flow chart shown in Figure 4. The information D enabling display of the message "Transferable" is then sent to the mobile phone 3 and the procedure returns to Step S31 in the flow chart shown in Figure 5.

When the image data sets S are sent from the digital camera 1, the DPE store 2 sequentially receives the image data sets S and stores the image data sets S in the server 22 (Step S11 in the flow chart shown in Figure 3). Based on the ID information added to the image data sets S, the image data sets S are stored in the user directory corresponding to the ID information.

The confirmation information B representing the fact that the image data sets S have been normally stored in the server 22 is sent to the digital camera 1 via the mobile phone 3 (Step S12). The digital camera 1 receives the confirmation information B (Step S13), and sets the Archive property OFF regarding the image data sets S that have been sent (Step S14). Whether or not the Archive property has been set OFF for all the image data sets S that have been sent is then judged (Step S15). If a result at Step S15 is affirmative, the procedure ends.

Meanwhile, whether all the image data sets S have been received or not is then judged (Step S16), after Step S12. If a result at Step S16 is negative, the image data sets S are further received and stored. If the result at Step S16 is affirmative, the procedure ends.

It is preferable for a communication error to be detected by using a checksum method or the like, during the transmission of the image data sets S. The communication error detection may be carried out for the communication between the digital camera 1 and the mobile phone 3 and for the communication between the mobile phone 3 and the DPE store 2. Alternatively, the error check may be carried out for communication between the digital camera 1 and the DPE store 2. In the case where a communication error has been detected, the transmission is retried for up to a predetermined number of times. If the trial reaches the predetermined number, the communication ends. Alternatively, the user can select further retry.

In many cases, a communication condition improves by changing a location of transmission. For this reason, in the case where the transmission has been stopped due to the error and communication becomes more reliable by changing the location, the user restarts transmission of the image data sets S whose transmission has been suspended due to the error. In the case where the user stops the transmission due to the error, information of whether or not the transmission has been carried out is stored for all the image data sets S, and only the image data sets S whose transmission has not been carried out are sent after the transmission is restarted. In this case, the Archive property of each of the image data sets S in the recording medium 12 is set OFF after completion of transmission thereof. In this manner, whether or not the transmission has been carried out can be judged by checking the Archive property.

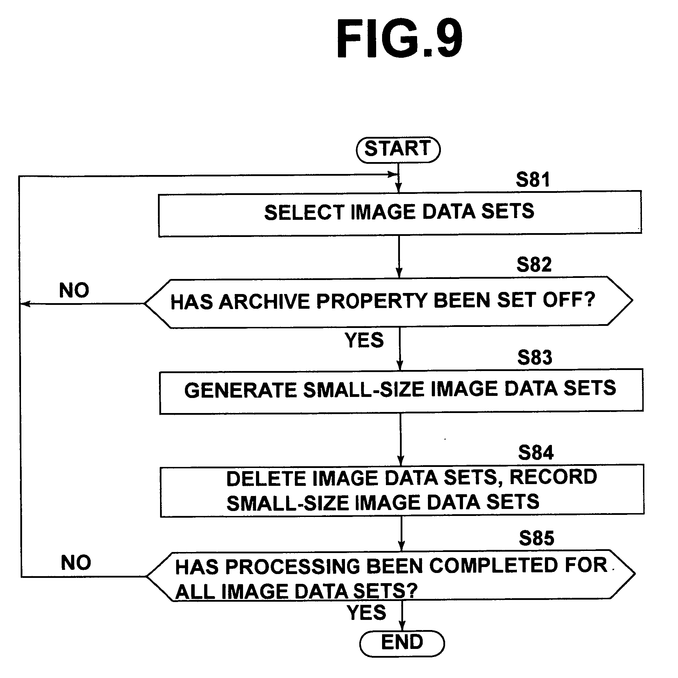

Thereafter, the following procedure is carried out in the digital camera 1. Figure 9 is a flow chart showing the procedure carried out in the digital camera 1. First, one of the image data sets S stored in the recording medium 12 is selected (Step S81), and whether or not the Archive property thereof is OFF is judged (Step S82). If a result at Step S82 is affirmative, the image data set S is subjected to processing to reduce the size thereof, and a small-size image data set is generated (Step S83). The small-size image data set may represent an image reduced from an image represented by the image data set S. Alternatively, the small-size image data set may have a higher compression rate.

If the result at Step S82 is negative, the procedure returns to Step S81 for further selection of the image data set S. The image data set S for which the small-size data set has been generated is deleted from the recording medium 12, and the small-size image data set is recorded in the recording medium 12 instead. Whether or not the procedure from Step S81 to Step S84 has been carried out for all the image data sets S in the recording medium 12 is then judged (Step S85). If a result at Step S85 is affirmative, the procedure ends. If the result at Step S85 is negative, the procedure returns to Step S81 for further selection of the image data set S. The procedure from Step S81 to Step S85 is then repeated.

Each of the small-size image data sets has a smaller data size than the corresponding image data set S. Therefore, by recording the small-size image data sets in the recording medium 12 instead of the image data sets S, the free space of the recording medium 12 can be saved. Consequently, the user can continue photography and can newly record image data sets in the recording medium 12. Since the recording medium 12 stores the small-size image data sets of the image data sets S that have been sent to the DPE store 2, the image data sets S stored in the server 22 can be easily confirmed by referring to the small-size image data sets.

In the case where the image data sets S are of Exif file format and added with thumbnail image data sets, the thumbnail image data sets may be used as the small-size image data sets. In this case, only the thumbnail image data sets are stored in the recording medium 12 by deleting the image data sets S but not deleting the thumbnail image data sets.

The procedure for reducing the size of the image data sets S may be carried out according to an instruction from the mobile phone 3. Alternatively, the image data sets S may be displayed on the LCD monitor 15 or 31 of the digital camera 1 or the mobile phone 3 so that the procedure can be carried out while the user is confirming the content of the image data sets S.

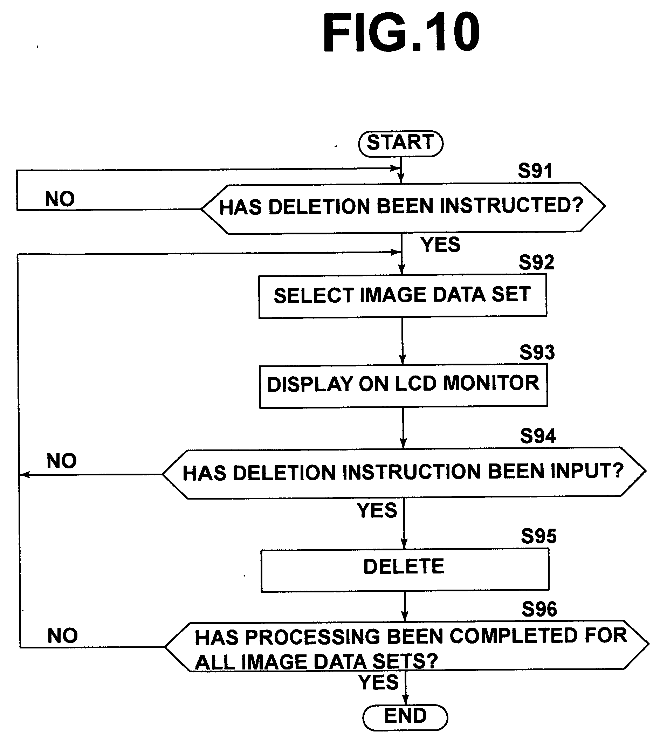

The following procedure may be carried out in the digital camera 1. Figure 10 is a flow chart showing the procedure carried out in the digital camera 1. First, the user instructs deletion of the image data sets S recorded in the recording medium 12 by using the input means 17 (Step S91). One of the image data sets S stored in the recording medium 12 is selected (Step S92), and displayed on the LCD monitor 15 (Step S93). Whether or not a deletion instruction has been input for the image data set S displayed on the LCD monitor 15 is then judged (Step S94). If a result at Step S94 is affirmative, the image data set S is deleted from the recording medium 12 (Step S95). If the result at Step S94 is negative, the procedure returns to Step S92 for further selection of the image data set S, and the procedure from Step S92 to Step S94 is repeated.

Whether or not the procedure from Step S92 to Step S95 has been carried out for all the image data sets S stored in the recording medium 12 is then judged (Step S96). If a result at Step S96 is affirmative, the procedure ends. If the result is negative, the procedure returns to Step S92 for further selection of the image data set S. The procedure from Step S92 to Step S96 is then repeated.

If the image data sets S are deleted from the recording medium 12 as has been described above, the free space of the recording medium 12 increases in size. Therefore, the user can continue photography to record more image data sets in the recording medium 12. Furthermore, since the image data sets S are displayed on the LCD monitor 15 at the time of deletion thereof, the user can confirm the image data sets Ss that have been stored in the server 22 before deletion. Consequently, the user can memorize which of the image data sets S have been stored in the server 22, and can easily confirm the image data sets Ss by refreshing his/her memory.

The image data sets S may be deleted by an input of instruction from the mobile phone 3. In this case, the image data sets S are displayed on the LCD monitor 31 of the mobile phone 3 for confirmation of deletion.

The digital camera 1 may alternatively automatically delete the image data sets S whose Archive property has been set OFF. In this case, the information for deleting the image data sets S is sent from the DPE store 2 to the mobile phone 3, and the mobile phone 3 transfers the information to the digital camera 1. The digital camera 1 receives the information and deletes the image data sets S from the recording medium 12.

The user can download the image data sets Ss stored in the server 22 to the personal computer 4 by accessing the DPE store 2 from the personal computer 4 at home. The image data sets Ss stored in the server 22 are added with the ID information, and classified in the user directory according to the ID information. Therefore, by sending the ID information from the personal computer 4 to the DPE store 2, the user can easily access the image data sets Ss stored in the user directory in the server 22 and can easily search for the image data sets Ss stored therein.

The ID information and the IP address of the personal computer 4 may be registered with the DPE store 2 in advance. By relating the ID information and the IP address, the user can access the user directory without sending the ID information from the personal computer 4.

In the case where the image data sets S are stored in the server 22 with reference to the ID information of the digital camera 1, the user does not need to input the ID information from the personal computer 4 if the ID information is sent to the personal computer 4 according to a short-distance network communication standard such as Bluetooth and if the ID information is then sent from the personal computer 4 to the server 22. In this case, the ID information may alternatively be sent to the personal computer 4 by connecting the digital camera 1 to the personal computer 4 by a wired connection, such as a cradle or USB, instead of Bluetooth.

The DPE store 2 may set the Archive property OFF regarding the image data sets Ss that the user has downloaded. Since the image data sets Ss whose Archive property is OFF have been downloaded to the personal computer 4 of the user, the image data sets Ss can be prevented from being deleted by error, if the user sequentially deletes the image data sets Ss whose Archive property has been set OFF in order to secure the free space of the user directory.

As has been described above, in this embodiment, the total size of the image data sets S to be sent is calculated, and the size information C representing the calculated total size is sent to the DPE store 2 before transmission of the image data sets S. Therefore, the DPE store 2 can compare the total size of the image data sets S represented by the size information C with the free space size in the server 22, and can judge whether or not the image data sets S to be sent can be stored. Consequently, by sending the information D in accordance with the result of comparison to the mobile phone 3 or to the digital camera 1, the digital camera 1 can carry out the processing such as transmission of the image data sets S or cancellation of the transmission. In this manner, the image data sets S that cannot be stored in the server 22 can be prevented from being sent, and useless transmission and reception of the image data sets S can be reduced.

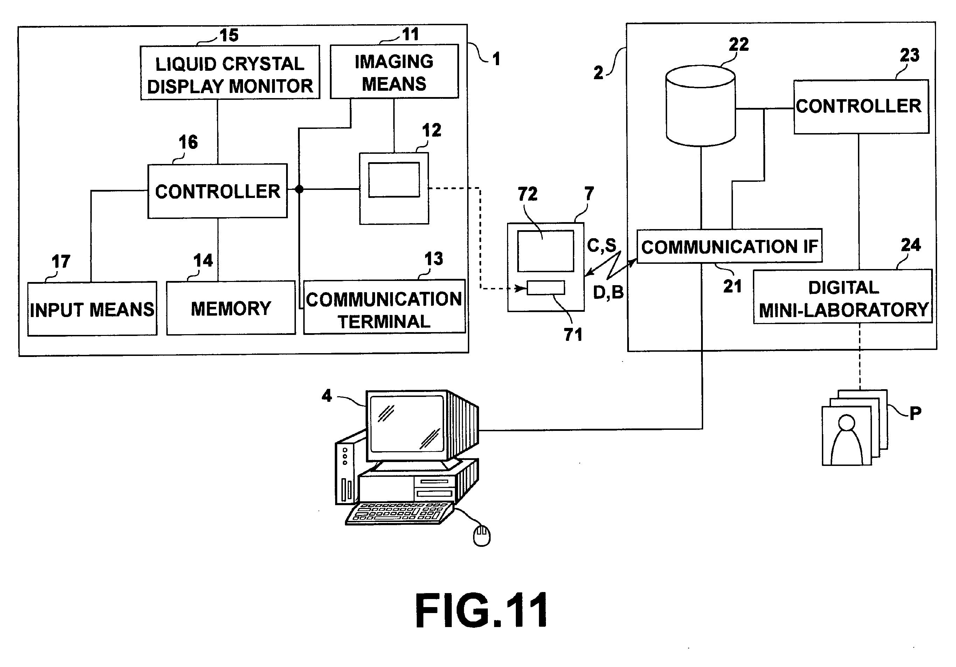

A second embodiment of the present invention will be explained next. Figure 11 is a block diagram showing a configuration of an image data sending system using a digital camera and an image data storing apparatus of the second embodiment of the present invention. In the second embodiment, the same elements as in the first embodiment have the same reference numbers and detailed explanations thereof are omitted. In the second embodiment, a communication terminal 7 installed in a place other than the home of the user is used for communication with the DPE store 2, instead of the mobile phone 3 in the first embodiment.

The communication terminal 7 is installed in a hotel, in a convenience store, or at an event site such as a site for an athletic contest. The communication terminal 7 has a slot 71 for reading the image data sets S from the recording medium 12 and a monitor 72 for carrying out various kinds of display.

In the second embodiment, the user sets the recording medium 12 in the slot 71 of the communication terminal 7 outside his/her home, and instructs transfer of the image data sets S. The image data sets S are then sent to the DPE store 2 and stored in the server 22. In the case where the free space is not large enough, the commands and the message are displayed on the monitor 72, based on the information D sent from the DPE store 2 to the communication terminal 7, as in the first embodiment described above. Once the image data sets S have been sent, the Archive property of each of the image data sets S recorded in the recording medium 12 is set OFF and the image data sets S in the recording medium 12 are subjected to size reduction processing or deletion processing by the digital camera 1.

In the second embodiment, the DPE store 2 that receives the image data sets S sends a processing ID that notifies reception of the image data sets S to the communication terminal 7. The image data sets S are stored in the server 22 by being added with the processing ID. The processing ID is displayed on the monitor 72 of the terminal 7. It is preferable for the communication terminal 7 to print the processing ID to be provided to the user. The user can confirm that the image data sets S have been stored in the server 22 of the DPE store 2 by the processing ID displayed or printed by the communication terminal 7 . The user can access the image data sets S or inquire the DPE store 2 about the image data sets S stored in the server 22, by using the processing ID.

In the above embodiments, the image data sets S recorded in the recording medium 12 are sent to the DPE store 2 and stored in the server 22 of the DPE store 2. However, a print order may also be placed at the time of transmission of the image data sets S. In this case, in the first embodiment, an order page for inputting a quantity, a size and the like for prints is displayed on the LCD monitor 31 of the mobile phone 3, for each of the image data sets S to be sent. The user generates order information by inputting the quantity of prints and the like by using the operation buttons 32, and sends the order information to the DPE store 2, together with the image data sets S. Meanwhile, in the second embodiment, an order page is displayed on the monitor 72 of the communication terminal 7, and a quantity, a size, and the like are input from input means that is not shown. In this manner, the order information is generated and sent to the DPE store 2, together with the image data sets S. The digital camera 1 may generate the order information to be sent to the DPE store 2 via the mobile phone 3 or the communication terminal 7.

The DPE store 2 generates a print or prints P (hereinafter referred to as the prints P) by using the digital mini-laboratory 24, based on the order information. The DPE store 2 sends information for displaying the time of delivery to the mobile phone 3 or to the communication terminal 7. In this manner, the user can know when generation of the prints P is completed. Since the communication terminal 7 is installed in an event site or the like, the time of delivery cannot be confirmed later if the time is only displayed on the monitor 72. Therefore, it is preferable for the communication terminal 7 to print the time of delivery and provide it to the user.

In the case where the print order has been placed, the DPE store 2 may generate index image data sets from the image data sets S that have been received so that the index image data sets are sent to the mobile phone 3 or to the communication terminal 7. In the case where the index image data sets are sent to the mobile phone 3, index images represented by the index image data sets may be displayed on the LCD monitor 31 of the mobile phone 3. Alternatively, the index image data sets may be sent to the digital camera 1 via the mobile phone 3 and displayed on the LCD monitor 15 of the digital camera 1. In the case where the index image data sets are sent to the communication terminal 7, the index images maybe displayed on the monitor 72 of the communication terminal 7. Alternatively, the communication terminal 7 may have a printer so that the printer can print the index images.

The user visits the DPE store 2 thereafter, and receives the prints P by paying a charge. The prints P may alternatively be provided to the user by delivery or mail. In this case, the user can pay the charge by electronic settlement using his/her bank account or his/her credit card.

In the case where the user places the print order by using the communication terminal 7, it is preferable for the user and the processing ID to be authenticated by notification of the processing ID to the DPE store 2 via the mobile phone or the like. The DPE store 2 generates the prints P only in the case where the processing ID and information for identifying the user such as his/her mobile phone number are authenticated.

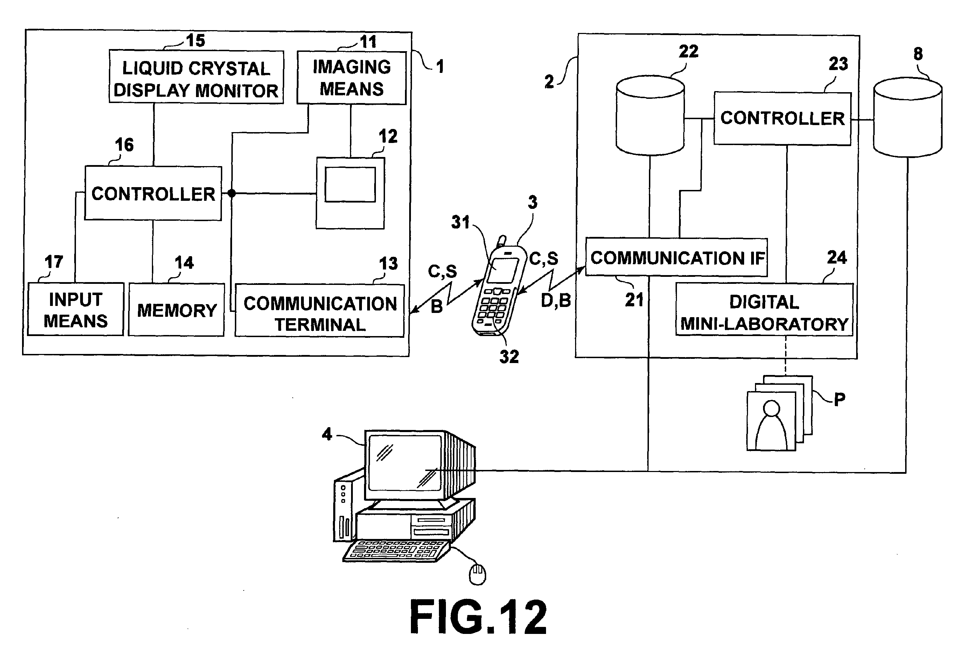

After the charge for the prints P has been paid, the image data sets S may be sent from the DPE store 2 to a photograph bank 8, as shown by a third embodiment of the present invention in Figure 12. The photograph bank 8 stores the image data sets S. In this case, the user can access the photograph bank 8 from the personal computer 4 and can view the image data sets S.

In this case, the image data sets Ss stored in the server 22 of the DPE store 2 may be deleted automatically after a predetermined period (such as 2 months) has elapsed.

In the above embodiments, the image data sets S are sent by communication with the DPE store 2 via the mobile phone 3 or via the communication terminal 7. However, the communication terminal 13 of the digital camera 1 may be able to communicate directly with the communication IF 21 of the DPE store 2 so that the image data sets S can be sent from the digital camera 1 to the DPE store 2, without involving the mobile phone 3 or the communication terminal 7.

In the embodiments described above, the digital camera 1, the DPE store 2, and the mobile phone 3 or the communication terminal 7 send and receive the image data sets S, the information D and the like by wireless communication. However, the image data sets S and the like may be sent and received via wired communication.

A skilled artisan would know that computer readable media are not limited to any specific type of storage device and include any kind of device, including but not limited to CDs, floppy discs, RAMs, ROMs, hard discs, magnetic tapes, and internet downloads, in which computer instructions can be stored and/or transmitted. Transmission of the computer code through a network or through wireless transmission means is also within the scope of this invention. Additionally, computer code/instructions include, but are not limited to, source, object, and executable code and can be in any language including higher level languages, assembly language and machine language.

## Claims

1. An image data sending method comprising the step of sending image data recorded in a recording medium by a digital camera that is communicable with data storage means to the data storage means having a function of remote communication, wherein the image data sending method further comprises the steps of:
calculating the total size of the image data to be sent to the data storage means; and
the step of sending size information representing the total size to the data storage means before sending the image data.

2. A digital camera communicable with data storage means that has a function of remote communication, the digital camera having transmission means for sending image data recorded in a recording medium to the data storage means, wherein
the digital camera further comprises size calculation means for calculating the total size of the image data to be sent to the data storage means, and
the transmission means sends size information representing the total size to the data storage means before sending the image data.

3. A program that causes a computer to execute an image data sending method comprising the step of sending image data recorded in a recording medium by a digital camera that is communicable with data storage means to the data storage means having a function of remote communication, wherein the program further comprises the steps of:
calculating the total size of the image data to be sent to the data storage means; and
the step of sending size information representing the total size to the data storage means before sending the image data.

4. An image data storing method for storing the image data sent from the digital camera defined in Claim 2 in a storing medium, the image data storing method comprising the steps of:
comparing the total size of the image data represented by the size information with the free space size in the storing medium; and
sending information in accordance with a result of the comparison to the digital camera.

5. An image data storing method as defined in Claim 4, wherein the information in accordance with the result of comparison includes either information representing the fact that the image data can be stored in the case where the free space size in the storing medium is equal to or larger than the total size of the image data, or information representing the free space size in the case where the free space size in the storing medium is smaller than the total size of the image data.

6. An image data storing method as defined in Claim 5, wherein the information in accordance with the result of comparison includes at least one of information for prompting deletion of image data already stored in the storing medium, information for prompting an increase in the size of the storing medium, information for prompting cancellation of transmission of the image data, and information for prompting processing for decreasing the total size of the image data to be sent, in the case where the free space size is smaller than the total size of the image data.

7. An image data storing method as defined in Claim 6, further comprising the step of deleting the image data already stored in the storing medium according to information sent from the digital camera concerning deletion of the image data in the storing medium, in the case where the information for prompting deletion is sent to the digital camera.

8. An image data storing method as defined in Claim 6, further comprising the step of increasing the size of the storing medium according to information sent from the digital camera concerning an increase in size, in the case where the information for prompting the increase in the size of the storing medium is sent to the digital camera.

9. An image data storing apparatus for storing the image data sent from the digital camera defined in Claim 2 in a storing medium, the image data storing apparatus comprising:
comparison means for comparing the total size of the image data represented by the size information with the free space size of the storing medium; and
storage information sending means for sending information in accordance with a result of the comparison to the digital camera.

10. An image data storing apparatus as defined in Claim 9, wherein the information in accordance with the result of comparison includes either information representing the fact that the image data can be stored in the case where the free space size in the storing medium is equal to or larger than the total size of the image data, or information representing the free space size of the storing medium in the case where the free space size is smaller than the total size of the image data.

11. An image data storing apparatus as defined in Claim 10, wherein the information in accordance with the result of comparison includes at least one of information for prompting deletion of image data already stored in the storing medium, information for prompting an increase in the size of the storing medium, information for prompting cancellation of transmission of the image data, and information for prompting processing for decreasing the total size of the image data to be sent, in the case where the free space size in the storing medium is smaller than the total size of the image data.

12. An image data storing apparatus as defined in Claim 11, further comprising control means for deleting the image data already stored in the storing medium according to information sent from the digital camera concerning deletion of the image data in the storing medium in the case where the information for prompting deletion is sent to the digital camera.

13. An image data storing apparatus as defined in Claim 11, further comprising control means for increasing the size of the storing medium according to information sent from the digital camera concerning an increase in the size of the storing medium in the case where the information for prompting the increase in the size of the storing medium is sent to the digital camera.

14. A program that causes a computer to execute an image data storing method for storing the image data sent from the digital camera defined in Claim 2 in a storing medium, the program comprising the steps of:
comparing the total size of the image data represented by the size information with the free space size in the storing medium; and
sending information in accordance with a result of the comparison to the digital camera.

15. A program as defined in Claim 14, wherein the information in accordance with the result of comparison includes either information representing the fact that the image data can be stored in the case where the free space size in the storing medium is equal to or larger than the total size of the image data, or information representing the free space size in the case where the free space size in the storing medium is smaller than the total size of the image data.

16. A program as defined in Claim 15, wherein the information in accordance with the result of comparison includes at least one of information for prompting deletion of image data already stored in the storing medium, information for prompting an increase in the size of the storing medium, information for prompting cancellation of transmission of the image data, and information for prompting processing for decreasing the total size of the image data to be sent, in the case where the free space size is smaller than the total size of the image data.

17. A program as defined in Claim 16, further comprising the step of deleting the image data already stored in the storing medium according to information sent from the digital camera concerning deletion of the image data in the storing medium, in the case where the information for prompting deletion is sent to the digital camera.

18. A program as defined in Claim 16, further comprising the step of increasing the size of the storing medium according to information sent from the digital camera concerning an increase in size, in the case where the information for prompting the increase in the size of the storing medium is sent to the digital camera.

19. A computer-readable recording medium storing a program that causes a computer to execute an image data storing method for storing the image data sent from the digital camera defined in Claim 2 in a storing medium, the program comprising the steps of:
comparing the total size of the image data represented by the size information with the free space size in the storing medium; and
sending information in accordance with a result of the comparison to the digital camera.

20. A computer-readable recording medium as defined in Claim 19, wherein the information in accordance with the result of comparison includes either information representing the fact that the image data can be stored in the case where the free space size in the storing medium is equal to or larger than the total size of the image data, or information representing the free space size in the case where the free space size in the storing medium is smaller than the total size of the image data.

21. A computer-readable recording medium as defined in Claim 20, wherein the information in accordance with the result of comparison includes at least one of information for prompting deletion of image data already stored in the storing medium, information for prompting an increase in the size of the storing medium, information for prompting cancellation of transmission of the image data, and information for prompting processing for decreasing the total size of the image data to be sent, in the case where the free space size is smaller than the total size of the image data.

22. A computer-readable recording medium as defined in Claim 21, the program further comprising the step of deleting the image data already stored in the storing medium according to information sent from the digital camera concerning deletion of the image data in the storing medium, in the case where the information for prompting deletion is sent to the digital camera.

23. A computer-readable recording medium as defined in Claim 21, the program further comprising the step of increasing the size of the storing medium according to information sent from the digital camera concerning an increase in size, in the case where the information for prompting the increase in the size of the storing medium is sent to the digital camera.
